# EUROPEAN PATENT APPLICATION

(11) **EP 1 808 239 A1**
(43) Date of publication of application: **18.07.2007**
(21) Application number: 06000796.0
(22) Date of filing: 16.01.2006
(51) Int. Cl.: B22C 9/06, B22F 3/115

(54) **Spray coated light weight mold**

(71) Applicant: GMIC Corp., Linden NJ 07036 (US)
(72) Inventor: Covino, Charles P., Far Hills NJ 07931 (US); Aversenti, Edmund, Gladstone NJ 07934 (US)
(74) Representative: Amery, Marcus James

(57) **Abstract**

A unitary metallic structure having a foam core used, for example as a mold, is formed by a spray deposition of metallic layers over a foam model. The shell is lighter in weight than other molds made by other processes.

## Description

### BACKGROUND OF THE INVENTION

The present invention relates to the thermal spraying of tools, more specifically, the present invention relates to the metallic thermal spraying of tools onto a foam matrix.

Industrial processes such as molding and layup of composite materials, thermoforming, injection molding and reaction injection molding require tools having shapes specific to the article to be made. For example, a composite article can be formed in a mold having an internal shape corresponding to the shape of the desired article by laying up fibers and a matrix composition such as an epoxy or other polymeric material on the surface of the mold and curing the polymer composition. In some cases, the fibers and composition are held between two mating mold parts so that the fibers and composition are squeezed between the surfaces of the mold parts. In reaction injection molding, two or more mating mold parts are brought together to form a substantially closed cavity and a reactive polymer composition is placed within the cavity and cured to form a shape corresponding to the shape of the cavity.

There has been an ever-increasing need for large molds in numerous industries. For example, in the aerospace industry, the increasing prevalence of composite structural materials in airframes has lead to a substantial need for practical large molds. These molds often must meet demanding conditions in use. For example, composite parts used in airframes must meet exacting standards for fit and finish and often incorporate complex curved surfaces. Also, many useful materials such as carbon-fiber reinforced graphite composites ("CFRP") must be molded at relatively high temperatures. Molds formed from alloys having low coefficients of thermal expansion such as nickel alloys are preferred for bonding these materials.

Thus, the importance of these molds is evident. However, the process of creating such molds has been somewhat difficult. While tools for fabrication of small parts are often machined from solid metals, using conventional machining techniques, these techniques are impractical in the case of very large molds, having dimensions of a meter or more. The cost of machining these large molds from solid blocks of material is prohibitive. However, there have been several innovative and cost effective methods for fabricating such molds proposed.

As described in greater detail in commonly assigned U.S. Patent Nos. 5,817,267 ("the '267 patent") and 6,447,704 ("the '704 patent"), the disclosures of which are hereby incorporated by reference herein, molds and other tools of essentially unlimited dimensions may be formed from a wide variety of metals, including low-expansion nickel and iron alloys, by a thermal spraying process. As described in certain embodiments of the '267 patent, a shell having a working surface with a desired shape can be formed by providing a matrix having the desired shape and spraying droplets of molten metal using a thermal spray gun, such as a plasma spray gun or arc spray gun onto the matrix. Such spraying can be used to build up the metal to a substantial thickness, typically about one-quarter inch (6 mm) or more. During the deposition process, the spray gun is moved relative to the matrix so that the spray gun passes back and forth over the surface of the matrix in a movement direction and so that the spray gun shifts in a step direction transverse to the movement direction between passes. Thus, during at least some successive passes, metal is deposited on the same region of the matrix from two different spray directions in a "crisscross" pattern. The resulting shells have substantial strength and good conformity with the matrix to provide a faithful reproduction of the matrix shape. Although the '267 patent is not limited by any theory of operation, it is believed that deposition of the metal in different spray directions can produce an interwoven pattern of metal droplets and/or metal grains in the deposited shell, and that this produces a stronger, generally better shell.

While the fabrication of large molds, as taught in the '267 and '704 patents, is indeed innovative and cost effective, there are drawbacks. Although the process as taught in the "267 and `704 patents utilizes less material than the average mold, molds of the type disclosed therein are often large and thus, very heavy. The shear size and weight of these molds often creates logistical problems relating to the transportation or other movement of the molds.

Therefore, there exists a need for a lighter weight mold for use in large scale industrial molding processes.

### SUMMARY OF THE INVENTION

A first aspect of the present invention is a method of making a light weight mold. The method according to this aspect preferably includes providing a foam model having an active surface substantially corresponding to a shape to be molded, and spray depositing a metal layer on at least the active surface by making a plurality of passes with at least one spray gun until a desired metal layer thickness is achieved. The spray depositing step may form at least a working surface substantially corresponding to the shape to be molded. Preferably, the exterior surface area of at least the working surface is at least one square meter.

Another aspect of the present invention is a mold including a unitary metallic structure having a foam based core. The structure preferably defines a working surface having a shape corresponding to the shape of an article to be molded. Preferably, the working surface is at least one square meter in area.

Yet another aspect of the present invention is a method of molding. The method according to this aspect preferably includes the steps of providing a mold including a unitary metallic structure having a foam based core, applying a composition to be molded so that the composition contacts the metallic structure, and curing the composition. In accordance with this aspect, the working surface of the metallic structure may be at least one square meter in area.

### BRIEF DESCRIPTION OF THE DRAWINGS

A more complete appreciation of the subject matter of the present invention and the various advantages thereof can be realized by reference to the following detailed description in which reference is made to the accompanying drawings in which:
Figure 1 is a diagrammatic partially sectional view depicting one stage during formation of the metallic layer on one side of a mold in accordance with an embodiment of the present invention.
Figure 2 is a diagrammatic partially sectional view depicting another stage during formation of the metallic layer on other sides of the mold in accordance with Figure 1.
Figure 3 is a diagrammatic partially sectional view depicting another stage during the formation of the metallic layer on the bottom side of the mold in accordance with Figure 1.

### DETAILED DESCRIPTION

In describing the preferred embodiments of the subject matter illustrated and to be described with respect to the drawings, specific terminology will be used for the sake of clarity. However, the invention is not intended to be limited to any specific terms used herein, and it is to be understood that each specific term includes all technical equivalents which operate in a similar manner to accomplish a similar purpose.

As shown in the Figures, a process for making a mold in accordance with one embodiment of the present invention preferably uses a foam model 10 having top side 12, bottom side 14, and four intermediate sides 16, 18, 20, and 22 (20 and 22 are not shown in the figures). Clearly though, a foam model 10 having any number of sides may be utilized. Top side 12 may include an active surface 24 with a shape corresponding to the shape of the part to be molded. However, it is contemplated that in certain embodiments, active surface 24 can be formed on any of the aforementioned sides. The foam model 10 can be constructed from essentially any foam material having relatively light weight and useful structural strength at the temperatures attained by the matrix during application of the sprayed metal. This is typically on the order of 220°F (104°C). An example of suitable foam material is CFOAM^{®}, a structural material manufactured by Touchstone Research Laboratory, Ltd of Triadelphia, West Virginia. This material is made from coal, and is relatively inexpensive and lightweight. Another example of foam material to be utilized with the process disclosed herein is a benzene based foam material, which may be more expensive to manufacture. Although the foam model 10 is depicted in the Figures as a solid, unitary body, it may incorporate internal structures such as hollow spaces, reinforcing members such as metal bars or fibers and the like. Also, while not shown in the Figures, it is contemplated that foam model 10 may be supported on a supporting structure such as a table or machine bed.

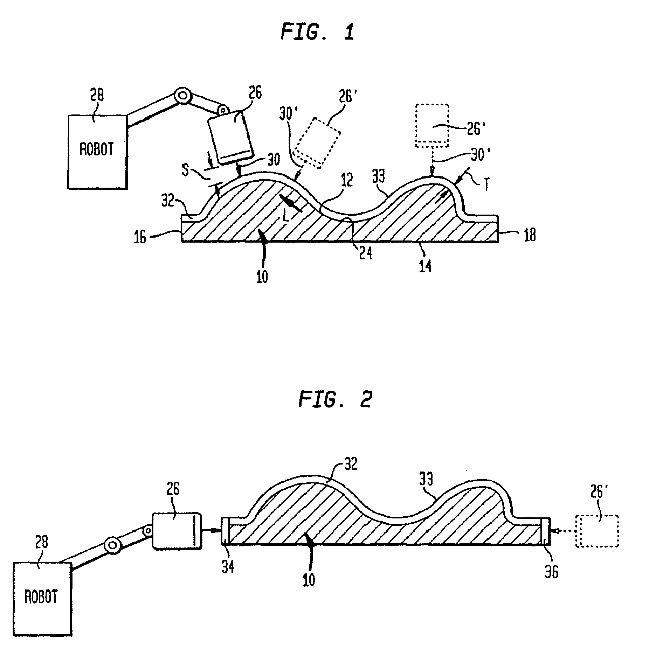

As is shown in Figure 1, a thermal spray gun 26 linked to a conventional industrial robot 28 is preferably used to spray deposit molten metal to the matrix. Thermal spray gun 26 may be any gun suitable for depositing the metal, such as, a conventional plasma spray gun or an arc spray gun. For example, a typical spray gun such as that sold under the designation Model BP400 Arc Spray System by Miller Thermal, Inc. of Appleton, Wisconsin is arranged to apply an electrical potential to strike an arc between a pair of wires and to feed the wires continually into the arc while blowing a stream of a compressed gas through the arc. The stream from such a spray gun preferably carries a spray of metal droplets formed from the molten wire at a high velocity in a relatively narrow pattern extending from the front of the gun so that the droplets move principally in a spray direction 30. in accordance with the present invention, the sprayed metal droplets may impinge on the active surface 24 of top surface 12 of foam model 10 and deposit as a first layer 32 having a working surface 33 that substantially conforms to the shape of active surface 24. First layer 32 preferably has a thickness direction T generally normal to active surface 24 of foam model 10, and a lateral direction L to working surface 33. Thus, layer 24 (and of the formed metal layers as a whole) may extend in directions generally to the left and right and generally into and out of the plane of the drawing shown in Figure 1.

A non-oxidizing gas such as nitrogen may be used as the gas in spraying and may be applied as a gas blanket over the area being sprayed. The use of such a non-oxidizing blanket minimizes oxidation of the metal during the process and promotes bonding of newly-sprayed metal to previously-sprayed metal. However, such a gas blanket is not required in order to conduct the process discussed above and further below.

The robot preferably maintains spray gun 26 at a preselected standoff distance or spacing S from foam model 10 and from the deposited layer. The standoff distance will depend upon the spray conditions and the particular head employed, but in accordance with the present invention, may be about 6-10 inches. As the metal is sprayed from spray gun 26, robot 28 preferably moves the spray gun head 26 in a sweeping pattern over the active surface 24 of the foam model. Desirably, robot 28 moves head 26 in a movement direction as, for example, into and out of the plane of the drawing as seen in Figure 1 and shifts the head in a step direction transverse to the movement direction (to the left and right in Figure 1) between passes. Robot 28 may generally situate spray gun 26 so that spray direction 30 is at a ninety degree angle with respect to active surface 24 of foam model 10 (further positions of the gun are shown in the depiction of spray gun 26' having spray direction 30' in Figure 1). The "splat" or pattern of metal droplets hitting working surface 33 may be assured substantially equal distribution when the spray direction 30 is situated at this ninety degree orientation with respect to active surface 24, something that is clearly desired in order to create a uniform first layer 32. However, it is contemplated that spray gun 26 may be situated so that spray direction 30 is at various angles, in certain situations, in order to more uniformly spray the metallic droplets. For example, active surfaces 24 that include severe or deep undulations may require an angled spray direction 30 to properly coat the surface with metal. The process of spraying first layer 32 is continued until a desired thickness is achieved. For example, in certain embodiments, spray gun passes are made until thickness T is approximately 0.062 inches at every point over the entire area of first layer 32. As mentioned above, a uniform thickness T will provide a working surface 33 that corresponds to the shape of active surface 24.

While the present invention is directed to forming at least one surface, working surface 33, onto foam model 10, it is contemplated that other surfaces may be formed also. As shown in Figure 2, a process similar to the aforementioned creation of first layer 32 may be repeated in order to create like layers over intermediate sides 16, 18, 20, and 22. Figure 2 depicts the process of spray depositing second layer 34 over intermediate side 16 and third layer 36 over intermediate side 18. It should be noted that similar layers may also be spray deposited over intermediate layers 20 and 22, although not shown in the Figures. While robot 28 is shown in Figure 2 as being capable of positioning spray gun 26 to properly deposit second and third layers 34 and 36, it is contemplated that foam model 10 (and first layer 32) may be manipulated to allow for easier access to sides 16 and 18. For example, foam model 10 may be rotated so as to allow the depositing of metal material in a more traditional vertical manner. Second and third layers 34 and 36 preferably take the shape of their respective sides 16 and 18. Sides 16 and 18 can be any shape desired.

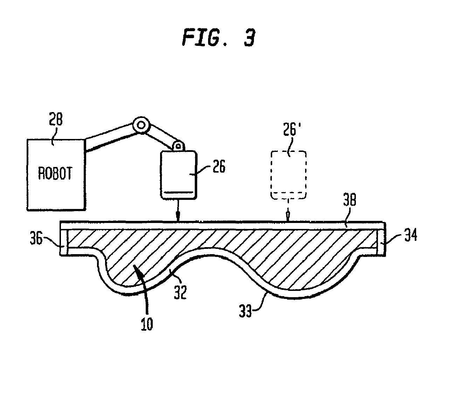

As shown in Figure 3, a similar process may once again be repeated to spray deposit a fourth layer 38 over bottom surface 14. To properly deposit fourth layer 38, foam model (and any previously deposited metallic layers) is preferably rotated one hundred eighty degrees so that spray gun 26 can spray in a manner similar to that performed to spray first layer 32. It is contemplated that the various metallic layers may be deposited in any order desired. For example, in certain embodiments, layers may be deposited over top sides 12 and bottom sides 14, prior to depositing similar material over intermediate sides 16, 18, 20, and 22.

In embodiments in which it is desired to spray deposit metal over all of the sides, upon the completion the spray depositing process over the final side the various metallic layers form a unitary metallic structure. Foam model 10 is then a foam core at the center of this metallic mold. This allows for a mold that is stable and durable enough to be utilized in a mold process, but yet much lighter in weight than a similar mold constructed solely of metallic material. As discussed above, any one of the aforementioned sides of foam model 10 may include a surface corresponding to an active surface 24 with a shape corresponding to the shape of the part to be molded. Any metallic layer may have a surface that conforms to this shape, and thus be useful in molding the part. For example, first layer 32 has working surface 33 that conforms to active surface 24 of top side 12, which is shaped to a specific part to form a corresponding shaped surface. It is also contemplated that more than one side may include a surface with a shape corresponding to the shape of a part to be molded. Hence, a single mold may be created having multiple surfaces for use in forming multiple parts.

In certain embodiments, such as where working surface 33 conforms to active surface 24, an additional finishing step may be performed to ensure that surface 33 more accurately and precisely takes the shape of the part to be molded. For example, subsequent to spray depositing first layer 32, working surface 33 may be machined or otherwise augmented to take the shape of active surface 24. Depending upon the care taken in spray depositing first layer 32, this finishing step may require the significant removal of material, or the basic smoothing of active surface 33. Nevertheless, it is contemplated that a finishing step may be necessary for only those surfaces which take the shape of a part to be molded, although it can be done for any surface. Therefore, for molds having more than one of such surfaces, multiple finishing steps may be required.

The material used to form the various layers is selected for compatibility with the material to be molded. Particularly in those applications involving elevated temperatures or substantial temperature changes during the molding operation, the material used to form the layers is selected to have a low coefficient of thermal expansion and to provide substantial strength at elevated temperature. Merely by way of example, materials such as aluminum alloys, ferrous metal such as stainless steels and iron-nickel alloys can be used. Alloys formed predominantly from iron and nickel are particularly preferred for this purpose. As used in this disclosure, a metal formed "predominantly from" certain metals contain at least about 50% of those metals in the aggregate. Thus, a metal formed predominantly from iron and nickel contains at least about 50% iron and nickel in the aggregate and 50% or less of other materials by weight. Alloys of iron and nickel containing between about 30% and about 55% nickel and between about 45% and about 70% iron are particularly preferred. The most preferred low-expansion alloys are those containing about 36% nickel, such as those sold under the commercial designation Invar. Preferably, the particular material utilized to form the various layers has a coefficient of thermal expansion ("CTE") which is similar to the CTE of the particular foam material utilized in forming foam model 10. This may aid in the spray process, and ensure that the resulting mold be a stable structure. For example, in certain embodiments, it is preferable to provide materials where the difference in their respective CTEs is negligible, thereby providing a ratio of CTEs which approaches 1.0. However, other embodiments are envisioned, in which the CTEs of the various materials differ.

As described in greater detail in the `267 patent, the metallic structure created by the deposited metallic layers can be allowed to cool gradually, desirably over a period of several hours and preferably over a longer time. For example, very large molds may be cooled from about 150°C to about 20°C over a period of several weeks in a temperature controlled environment with subsequent cooling at normal room temperature. It is believed that such gradual cooling tends to stabilize the metallic structure on foam model 10. It is noted that in certain embodiments, foam model 10 coupled with the unitary structure formed by the various deposited layers aids in the stability of the mold as a whole.

The completed mold can be used as a mold or a mold component. For example, in reaction injection molding or blow molding, two such assemblies can be engaged with one another so that their shaped surfaces form a closed cavity and a molten composition can be squeezed between the molds. In other processes such as thermoforming and some lay up processes, only one mold having a single shaped surface is employed.

As described in the '267 patent, the metallic layers can, in addition to any other finishing steps, be polished or otherwise treated to provide the desired surface finish. Also, the metal layers formed by thermal spraying may be porous or may be dense and substantially non-porous, depending upon the spray deposition conditions. The surfaces of the mold may be impregnated with a polymer or with a metal such as nickel by electroplating or electroless plating. Polymeric coatings such as homopolymers and copolymers of tetrachlorethylene, flouranated ethylene propylene, perofluoro alkoxyethylene, acrylics, vinylidene fluorides and amides can be applied by conventional coating and impregnation techniques to enhance the release properties of the mold and to decrease its porosity. Surface treatments such as those sold under the registered trademarks TUFRAM and NEDOX, release agents such as those sold under the registered trademark PLASMADIZE and coatings such as those sold under the registered trademark LECTROFLUOR, all available from the General Magnaplate Corporation of Linden, New Jersey may be applied on the working surfaces of the shells.

Finally, it is contemplated that the aforementioned process can be performed similarly utilizing a model made of any type of material suitable for providing the stability and thermal properties required in spray depositing the various layers. For example, in certain embodiments, a model of polymeric material may be utilized in the aforementioned process. While this type of material may be heavier than the previously discussed foam materials, its use would provide a mold having a weight significantly less than a similar mold made of solid metallic material. Essentially, the present invention is directed to creating a mold that is constructed from a minimal amount of metallic material, therefore being relatively light in weight, but also stable enough to be suitable in a molding process.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended claims.

## Claims

1. A method of making a light weight mold comprising the steps of:
(a) providing a foam model having an active surface substantially corresponding to a shape to be molded; and
(b) spray depositing a metal layer on at least the active surface by making a plurality of passes with at least one spray gun until a desired metal layer thickness is achieved, said spray depositing step thereby forming at least a working surface substantially corresponding to the shape to be molded,
wherein the exterior surface area of at least the working surface is at least one square meter.

2. The method according to claim 1 wherein the foam model is defined by at least three sides, at least one of the sides being the active surface.

3. The method according to claim 2 wherein a metal layer is sprayed on each of the sides thereby encapsulating the foam model with a metal layer.

4. The method according to claim 1 further comprising the step of finishing at least the working surface.

5. The method according to claim 1 wherein the foam model includes a top side, a bottom side, and four intermediate sides extending between the top side and the bottom side.

6. The method according to claim 5 wherein the top side includes the working surface.

7. The method according to claim 6 wherein a metal layer is sprayed on each of the sides thereby encapsulating the foam model with a metal layer.

8. The method according to claim 7 further including the step of rotating the foam model to allow the spray gun spray deposit metal on each of the sides.

9. The method according to claim 1 wherein the foam model is constructed from a coal based carbon.

10. The method according to claim 1 wherein the foam model is constructed from a benzene based carbon.

11. The method according to claim 1 wherein the spray gun is an arc spray gun.

12. The method according to claim 1 wherein the spray gun is a plasma spray gun.

13. The method according to claim 1 wherein the desired metal layer thickness is at least 0.1 inches thick.

14. The method according to claim 13 wherein the desired metal layer thickness is 0.25 inches thick.

15. The method according to claim 1 wherein the metal layer is constructed from the group consisting of iron, nickel, zinc, aluminum, and copper.

16. The method according to claim 15 wherein the metal layer is constructed from INVAR.

17. The method according to claim 1 wherein said finishing step includes machining the working surface.

18. The method according to claim 1 wherein said finishing step includes polishing the working surface.

19. The method according to claim 1 further comprising the step of sealing the working surface.

20. The method according to claim 19 wherein the step of sealing the working surface includes the step of impregnating the surface with a polymeric material.

21. The method according to claim 19 wherein the step of sealing the working surface includes the step of plating a metal onto the shell.

22. The method according to claim 1 further comprising the step of forming a composite part in said mold.

23. The method according to claim 1 further comprising the step of using said mold in a molding process.

24. A mold comprising:
a unitary metallic structure having a foam based core, said structure defining a working surface having a shape corresponding to the shape of an article to be molded, the working surface being at least one square meter in area.

25. The mold according to claim 24 wherein the foam based core is constructed from a coal based carbon.

26. The mold according to claim 24 wherein the foam based core is constructed from a benzene based carbon.

27. The mold according to claim 24 wherein said structure includes at least three sides.

28. The mold according to claim 27 wherein said structure includes a top side, a bottom side, and four intermediate sides extending between the top side and the bottom side, thereby encapsulating the foam based core.

29. The mold according to claim 28 wherein the top side includes the working surface.

30. The mold according to claim 24 wherein said structure is at least 0.1 inches thick.

31. The mold according to claim 30 wherein said structure is 0.25 inches thick.

32. The mold according to claim 24 wherein said structure is constructed from the group consisting of iron, nickel, zinc, aluminum, and copper.

33. The mold according to claim 32 wherein said structure is constructed from INVAR.

34. The mold according to claim 24, wherein a ratio of a coefficient of thermal expansion of the foam to a coefficient of thermal expansion of the metal is approximately 1.0.

35. A method of molding comprising:
providing a mold including a unitary metallic structure having a foam based core, the metallic structure including a working surface that is at least one square meter in area;
applying a composition to be molded to the working surface so that said composition contacts the metallic structure; and
curing the composition.

36. The method according to claim 35 wherein the working surface corresponds to the shape of an article to be molded.

37. The method according to claim 35 wherein said step of applying a composition includes laying up fibers and a curable matrix material on the working surface.

38. The method according to claim 35 further comprising providing an additional mold so that the additional mold and said mold cooperatively define an enclosed chamber holding the composition when placed together.

39. The method according to claim 35 wherein the foam based core is constructed from a coal based carbon.

40. The mold according to claim 35 wherein the foam based core is constructed from a benzene based carbon.

41. The mold according to claim 35 wherein the unitary metallic structure is constructed from the group consisting of iron, nickel, zinc, aluminum, and copper.

42. The mold according to claim 41 wherein said structure is constructed from INVAR.

43. The mold according to claim 35 wherein said structure includes a top side, a bottom side, and four intermediate sides extending between the top side and the bottom side, thereby encapsulating the foam based core.
